# EUROPEAN PATENT APPLICATION

(11) **EP 4 084 069 A1**
(43) Date of publication of application: **02.11.2022**
(21) Application number: 20914902.0
(22) Date of filing: 23.01.2020
(51) Int. Cl.: H01L 25/16

(54) **CHIP DEVICE AND WIRELESS COMMUNICATION DEVICE**

(71) Applicant: Huawei Technologies Co., Ltd., Shenzhen, Guangdong 518129 (CN)
(72) Inventor: CHI, Yusong, Shenzhen, Guangdong 518129 (CN)
(74) Representative: Maiwald Patent- und Rechtsanwaltsgesellschaft mbH
(86) International application number: PCT/CN2020/074025
(87) International publication number: WO 2021/147101

(57) **Abstract**

This application provides a chip apparatus, including a die, a first bond pad, a second bond pad, and a first solder pad. The first bond pad and the second bond pad are disposed on an upper surface of the die. A first power module and a second power module are disposed in the die. The first power module is coupled to the first bond pad. The second power module is coupled to the second bond pad. The first solder pad is separately coupled to an external power supply of the chip apparatus, the first bond pad, and the second bond pad. According to the foregoing technical solution, isolation between different power modules is improved, and noise transmitted on a power supply path can be better filtered out. This improves power supply noise performance of the chip apparatus.

## Description

### TECHNICAL FIELD

This application relates to the field of integrated circuits, and in particular, to a chip apparatus and a wireless communication apparatus.

### BACKGROUND

As more circuit modules are integrated in a chip, a power supply that supplies power to the circuit modules plays a very important role. In addition to a power supply capability of the power supply, power supply noise performance is also an important indicator that needs to be considered. Noise brought by the power supply enters the circuit modules through a power supply network, causing interference to operation of the circuit modules. Especially, high-frequency circuit modules in the chip are more sensitive to the noise caused by the power supply. Common circuit modules include a local oscillator (local oscillator, LO), a low noise amplifier (low noise amplifier, LNA), and the like in a radio frequency transceiver chip.

An existing solution for improving power supply noise performance of the chip is mainly to improve a design of the power supply. However, this improved design usually brings limited benefits, and also has specific limitations.

### SUMMARY

This application provides a chip apparatus and a wireless communication apparatus, to improve power supply noise performance of a chip.

According to a first aspect, a chip apparatus includes a die, a first bond pad, a second bond pad, and a first solder pad. The first bond pad and the second bond pad are disposed on an upper surface of the die. A first power module and a second power module are disposed in the die. The first power module is coupled to the first bond pad. The second power module is coupled to the second bond pad. The first solder pad is separately coupled to an external power supply of the chip apparatus, the first bond pad, and the second bond pad. According to the foregoing technical solution, the different power modules are connected to the same solder pad through the different bond pads. This improves isolation between the different power modules, improves power supply noise performance of the chip apparatus, and also reduces an area of a chip.

In a possible implementation, the chip apparatus further includes a redistribution layer. The redistribution layer is disposed on the upper surface of the die. The first solder pad is disposed on an upper surface of the redistribution layer. A first redistribution metal and a second redistribution metal are disposed in the redistribution layer. The first solder pad is coupled to the first bond pad through the first redistribution metal. The first solder pad is coupled to the second bond pad through the second redistribution metal. According to the foregoing technical solution, the redistribution metals are introduced, so that a length of a trace that connects a bond pad and a solder pad is more flexible and controllable, and an equivalent inductor on a power supply path is more easily adjusted. This improves noise performance of the chip apparatus.

In a possible implementation, one end of the first redistribution metal is connected to an upper surface of the first bond pad, and the other end of the first redistribution metal is connected to a lower surface of the first solder pad. One end of the second redistribution metal is connected to the upper surface of the first bond pad, and the other end of the second redistribution metal is connected to an upper surface of the second bond pad. According to the foregoing technical solution, the first redistribution metal and the second redistribution metal are connected between the first solder pad and the second bond pad. This further improves the equivalent inductor of the second power module on the power supply path, and improves noise performance.

In a possible implementation, a first capacitor is disposed in the die. A first end and a second end of the first capacitor are coupled to a high level and a low level respectively. According to this technical solution in this application, capacitance to ground of the first power module on the power supply path is further improved, and noise performance is improved.

In a possible implementation, the first capacitor includes a first MOS transistor, a second MOS transistor, and a first passive capacitor. The first MOS transistor and the first passive capacitor are coupled in series between the first end and the second end of the first capacitor. A gate of the first MOS transistor is configured to receive a first control signal. The first control signal is used for controlling conduction and cut-off of the first MOS transistor. A gate of the second MOS transistor is coupled to a connection end of the first passive capacitor and the first MOS transistor. A source and a drain of the second MOS transistor are jointly coupled to the first end of the first capacitor. According to the foregoing technical solution, capacitance density of the first capacitor is further improved, and anti-ESD performance of the capacitor is also improved.

In a possible implementation, the first capacitor includes a first MOS transistor, a second MOS transistor, a first passive capacitor, and a second passive capacitor. The first MOS transistor and the first passive capacitor are coupled in series between the first end and the second end of the first capacitor. A gate of the first MOS transistor is configured to receive a first control signal. The first control signal is used for controlling conduction and cut-off of the first MOS transistor. A gate of the second MOS transistor is coupled to a connection end of the first passive capacitor and the first MOS transistor. The second MOS transistor and the second passive capacitor are coupled in series between the first end and the second end of the first capacitor. A gate of the first MOS transistor is coupled to a connection end of the second passive capacitor and the second MOS transistor. According to the foregoing technical solution, capacitance density and anti-ESD performance of the first capacitor are further improved.

In a possible implementation, the first capacitor further includes a third MOS transistor. A width-to-length ratio of the third MOS is less than that of the first MOS transistor and the second MOS transistor. A source and a drain of the third MOS transistor are coupled to two ends of the first passive capacitor. A gate of the third MOS transistor is configured to receive a second control signal. The second control signal is used for controlling conduction and cut-off of the third MOS transistor. According to the foregoing technical solution, the third MOS transistor with a small size is introduced, so that a defective capacitor can be removed, and a yield is increased without reducing density of the capacitor. This further improves performance of the chip apparatus.

In a possible implementation, the chip apparatus further includes a third bond pad. The third bond pad is disposed on the upper surface of the die. A third redistribution metal is disposed in the redistribution layer. The first solder pad is connected to the third bond pad through the third redistribution metal. One end of the first capacitor is coupled to the third bond pad, and the other end of the first capacitor is grounded. A length of the third redistribution metal is less than a length of the first redistribution metal and a length of the second redistribution metal. According to the foregoing technical solution, the third bond pad with a grounded capacitor is introduced, so that the grounded capacitor may be added. A shorter connection line is introduced, so that a smaller inductor that is connected in series to the grounded capacitor may be brought. This further improves performance of the power supply.

In a possible implementation, a first inductor is further disposed in the die. One end of the first inductor is coupled to the first bond pad, and the other end of the first inductor is coupled to an input end of the first power module. According to the foregoing technical solution, an on-chip inductor is introduced, so that the inductor is added and connected in series to the power supply path of the power supply. This can further improve performance of the power supply.

In a possible implementation, a second capacitor is further disposed in the die. One end of the second capacitor is coupled to the input end of the first power module, and the other end of the second capacitor is grounded. According to the foregoing technical solution, the second capacitor is introduced, so that the grounded capacitor is added to the power supply path of the power supply. This can further improve power supply noise performance.

In a possible implementation, a first radio frequency receive path and a second radio frequency receive path are further disposed in the die. The first radio frequency receive path is configured to receive a first component carrier signal. The second radio frequency receive path is configured to receive a second component carrier signal. The first component carrier signal and the second component carrier signal jointly implement downlink carrier aggregation. A plurality of radio frequency modules are disposed in the first radio frequency receive path and the second radio frequency receive path. The first power module and the second power module are separately configured to supply power to one or more of the plurality of radio frequency modules. According to the foregoing technical solution, through such a design of a power supply architecture that improves power supply noise performance, smaller noise can be introduced. This improves performance of the radio frequency receive paths that are sensitive to noise of the power supply.

In a possible implementation, a second inductor is further disposed in the die. One end of the second inductor is coupled to the second bond pad, and the other end of the second inductor is coupled to an input end of the second power module. The first power module is a low-dropout regulator, and the first power module is configured to supply power to a first local oscillator of the first radio frequency receive path. The second power module is a low-dropout regulator, and the second power module is configured to supply power to a second local oscillator of the second radio frequency receive path. According to the foregoing technical solution, through a design of the independent low-dropout regulator with an on-chip inductor, power supply noise performance can be further improved. In addition, the power is separately supplied to the local oscillators, so that noise crosstalk can also be reduced. This further improves performance of the local oscillators.

In a possible implementation, the first power module is a low-dropout regulator, the first power module is a low-dropout regulator, and the first power module is configured to supply power to a first local oscillator of the first radio frequency receive path. The second power module is a low-dropout regulator, and the second power module is configured to supply power to a low-pass filter of the first radio frequency receive path. According to the foregoing technical solution, the power is separately supplied to the low-pass filter and the local oscillator. This further improves power supply noise performance.

According to a second aspect, this application provides a wireless communication apparatus, including a baseband processing chip and the chip apparatus in any possible implementation. The chip apparatus is coupled to the baseband processing chip.

In a possible implementation, the wireless communication apparatus further includes a printed circuit board and an antenna. The baseband processing chip and the chip apparatus are fastened to the printed circuit board. The antenna is configured to provide a radio frequency signal for the chip apparatus.

According to a third aspect, this application provides an integrated circuit. A capacitor module is disposed in the integrated circuit. The capacitor module includes a first end and a second end. The capacitor module is connected to an external circuit through the first end and the second end. The capacitor module includes a first MOS transistor, a second MOS transistor, and a first passive capacitor. The first MOS transistor and the first passive capacitor are coupled in series between the first end and the second end of the capacitor module. The first MOS transistor is configured to receive a control signal. The control signal is used for controlling conduction and cut-off of the first MOS transistor. A gate of the second MOS transistor is coupled to a connection end of the first passive capacitor and the first MOS transistor. A source and a drain of the second MOS transistor are jointly coupled to the first end of the capacitor module. According to the foregoing technical solution, the capacitor module has higher capacitance density and higher anti-ESD performance.

According to a fourth aspect, this application provides an integrated circuit. A capacitor module is disposed in the integrated circuit. The capacitor module includes a first end and a second end. The capacitor module is connected to an external circuit through the first end and the second end. The capacitor module includes a first MOS transistor, a second MOS transistor, a first passive capacitor, and a second passive capacitor. The first MOS transistor and the first passive capacitor are coupled in series between the first end and the second end of the capacitor module. The first MOS transistor is configured to receive a first control signal. The first control signal is used for controlling conduction and cut-off of the first MOS transistor. A gate of the second MOS transistor is coupled to a connection end of the first passive capacitor and the first MOS transistor. The second MOS transistor and the second passive capacitor are coupled in series between the first end and the second end of the capacitor module. According to the foregoing technical solution, capacitance density and anti-ESD performance of the capacitor module are further improved.

It should be understood that, in the solution provided in this application, the wireless communication apparatus may be a wireless communication device, or may be some components in the wireless communication device, for example, a chip, a chip combination, or an integrated circuit product such as a module including a chip. The integrated circuit product may be the chip apparatus provided in embodiments of this application.

Specifically, the wireless communication device may be a terminal such as a smartphone, or may be a radio access network device such as a base station. In terms of functions, chips for wireless communication may be classified into a baseband chip and a radio frequency chip. The baseband chip is also referred to as a modem (modem) or a baseband processing chip. The radio frequency chip is also referred to as a transceiver chip, a radio frequency transceiver (transceiver), or a radio frequency processing chip. Therefore, the wireless communication apparatus may be a single chip, or may be a combination of a plurality of chips, for example, a system chip, a chip platform, or a chipset.

The system chip is also referred to as a system on a chip (system on a chip, SoC), or referred to as a SoC chip for short. It may be understood that a plurality of chips are packaged together to form a larger chip. For example, the baseband chip may further be packaged in the SoC chip. The chip platform or the chipset may be understood as a plurality of chips that need to be used together. The plurality of chips are usually independently packaged, but the chips need to cooperate with each other during operation to jointly complete a wireless communication function. For example, the baseband chip (or the SoC chip integrated with the baseband chip) and the radio frequency chip are usually independently packaged, but need to be used together.

### BRIEF DESCRIPTION OF DRAWINGS

FIG. 1 is a schematic diagram of a structure of a wireless communication system according to an embodiment of this application;
FIG. 2 is a schematic diagram of a configuration of a carrier of a wireless communication system according to an embodiment of this application;
FIG. 3 is a schematic diagram of a structure of a wireless communication device according to an embodiment of this application;
FIG. 4 is a schematic diagram of a radio frequency chip according to an embodiment of this application;
FIG. 5 is a schematic side view of a chip apparatus according to an embodiment of this application;
FIG. 6 is a schematic diagram of a chip apparatus according to an embodiment of this application;
FIG. 7 is a schematic diagram of another chip apparatus according to an embodiment of this application;
FIG. 8 is a schematic diagram of a chip architecture according to an embodiment of this application;
FIG. 9 is a schematic diagram of another chip architecture according to an embodiment of this application;
FIG. 10 is a schematic diagram of a capacitor according to an embodiment of this application;
FIG. 11 is a schematic diagram of another capacitor according to an embodiment of this application;
FIG. 12 is a schematic diagram of another capacitor according to an embodiment of this application;
FIG. 13 is a schematic diagram of another capacitor according to an embodiment of this application; and
FIG. 14 is a schematic diagram of another capacitor according to an embodiment of this application.

### DESCRIPTION OF EMBODIMENTS

The following further describes technical solutions provided in this application with reference to the accompanying drawings and embodiments. It should be understood that a system structure and a service scenario provided in embodiments of this application are mainly intended to explain some possible implementations of the technical solutions in this application, and should not be construed as a unique limitation on the technical solutions in this application. A person of ordinary skill in the art may know that, as a system evolves and an updated service scenario emerges, the technical solutions provided in this application are still applicable to same or similar technical problems.

It should be understood that, in the following description of specific embodiments of the technical solutions provided in embodiments of this application, some repeated parts may not be described again, but it should be considered that the specific embodiments are mutually referenced and may be combined with each other.

In a wireless communication system, devices may be classified into devices that provide a wireless network service and devices that use a wireless network service. The devices that provide the wireless network service are devices that form a wireless communication network, and may be briefly referred to as network equipment (network equipment) or network elements (network elements). The network devices are typically owned by a carrier or an infrastructure provider, and are operated or maintained by these vendors. The network devices may further be classified into a radio access network (radio access network, RAN) device and a core network (core network, CN) device. The RAN device typically includes a base station (base station, BS).

It should be understood that the base station may also sometimes be referred to as a wireless access point (access point, AP) or a transmission reception point (transmission reception point, TRP). Specifically, the base station may be a universal NodeB (next generation NodeB, gNB) in a 5G new radio (new radio, NR) system or an evolved NodeB (evolved NodeB, eNB) in a 4G long term evolution (long term evolution, LTE) system. Base stations may be classified into a macro base station (macro base station) or a micro base station (micro base station) based on different physical forms or transmit powers of the base stations. The micro base station is also sometimes referred to as a small base station or a small cell (small cell).

The device that uses the wireless network service may be briefly referred to as a terminal (terminal). The terminal can establish a connection to the network device, and provide a specific wireless communication service for a user based on a service of the network device. It should be understood that, because the terminal has a closer relationship with the user, the terminal is also sometimes referred to as user equipment (user equipment, UE) or a subscriber unit (subscriber unit, SU). In addition, compared with a base station that is usually placed at a fixed position, the terminal usually moves along with the user, and is also sometimes referred to as a mobile station (mobile station, MS). In addition, some network devices such as a relay node (relay node, RN) or a wireless router may also sometimes be considered as terminals because the network devices have a UE identity or belong to the user.

Specifically, the terminal may be a mobile phone (mobile phone), a tablet computer (tablet computer), a laptop computer (laptop computer), a wearable device (for example, a smartwatch, a smart band, a smart helmet, or smart glasses), other devices that have a wireless access capability, for example, an intelligent vehicle, various internet of things (internet of things, IOTs) devices including various smart home devices (such as a smart meter and a smart home appliance) and smart city devices (such as a security or monitoring device and an intelligent road transportation facility), and the like.

For ease of description, the technical solutions in embodiments of this application are described in detail by using the base station and the terminal as examples in this application.

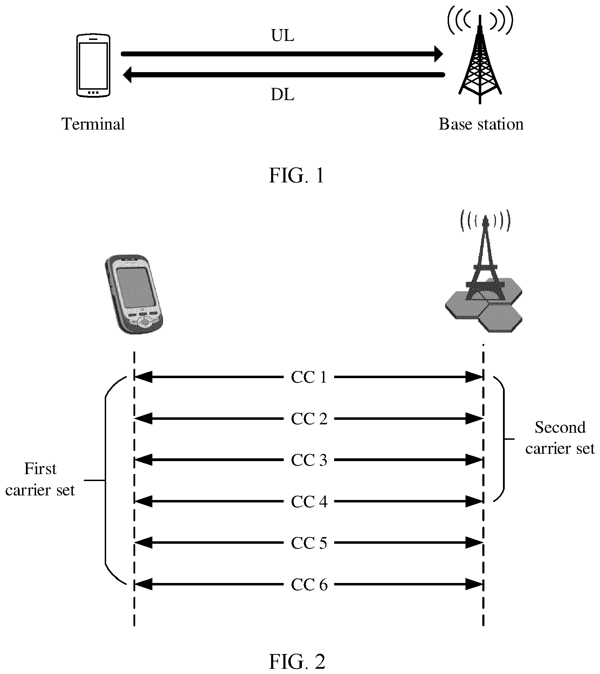

FIG. 1 is a schematic diagram of a structure of a wireless communication system according to an embodiment of this application. As shown in FIG. 1, the wireless communication system includes a terminal and a base station. Based on different transmission directions, a transmission link from the terminal to the base station is referred to as an uplink (uplink, UL), and a transmission link from the base station to the terminal is referred to as a downlink (downlink, DL). Similarly, data transmission over the uplink may be briefly referred to as uplink data transmission or uplink transmission, and data transmission over the downlink may be briefly referred to as downlink data transmission or downlink transmission.

In the wireless communication system, the base station may provide communication coverage for a specific geographical area by using an integrated or external antenna device. One or more terminals in a communication coverage area of the base station may be connected to the base station. One base station may manage one or more cells (cells). Each cell has one identity (identity). The identity is also referred to as a cell identity (cell identity, cell ID). From a perspective of a radio resource, a cell is a combination of a downlink radio resource and an uplink radio resource (optional) that is paired with the downlink radio resource.

It should be understood that the wireless communication system may comply with a wireless communication standard in the 3^{rd} generation partnership project (3^{rd} generation partnership project, 3GPP), or may comply with another wireless communication standard, for example, a wireless communication standard in the 802 series standards (for example, 802.11, 802.15, or 802.20) of the Institute of Electrical and Electronics Engineers (Institute of Electrical and Electronics Engineers, IEEE). Although FIG. 1 shows only one base station and one terminal, the wireless communication system may alternatively include other quantities of terminals and base stations. In addition, the wireless communication system may further include another network device, for example, a core network device.

The terminal and the base station need to know configurations predefined by the wireless communication system, including a radio access technology (radio access technology, RAT) supported by the system and a configuration of a radio resource stipulated by the system, for example, basic configurations of a radio frequency band and a carrier. The carrier is a frequency range that complies with a stipulation of the system. The frequency range may be determined jointly based on a center frequency of the carrier (denoted as a carrier frequency) and a bandwidth of the carrier. The configurations predefined by the system may be used as a part of a standard protocol for the wireless communication system, or may be determined through interaction between the terminal and the base station. Content of a related standard protocol may be prestored in memories of the terminal and the base station, or reflected as hardware circuits or software code of the terminal and the base station.

In the wireless communication system, the terminal and the base station each support one or more same RATs, for example, 5G NR, 4G LTE, or a RAT for a future evolved system. Specifically, the terminal and the base station each use a same air interface parameter, a same coding scheme, a same modulation scheme, and the like, and communicate with each other based on the radio resource stipulated by the system.

FIG. 2 is a schematic diagram of a configuration of a carrier of a wireless communication system according to an embodiment of this application. In the wireless communication system, a base station configures two carrier sets for a terminal, and the two carrier sets are denoted as a first carrier set and a second carrier set. The first carrier set may be used for downlink carrier aggregation (downlink carrier aggregation, DLCA), and the second carrier set may be used for uplink carrier aggregation (uplink carrier aggregation, ULCA). Frequency ranges of carriers included in the two carrier sets may be different, for example, terminals in a frequency duplex division (frequency division duplex, FDD) mode. Frequency ranges of carriers included in the two carrier sets may be the same, for example, terminals in a time duplex division (time duplex division, TDD) mode.

As shown in FIG. 2, the first carrier set includes six component carriers (component carriers, CCs), which are successively denoted as a CC 1 to a CC 6. The second carrier set includes four component carriers, including a CC 1 to a CC 4. It should be understood that quantities of CCs included in the first carrier set and the second carrier set are merely an example. In this embodiment of this application, the first carrier set and the second carrier set may alternatively include other quantities of CCs. The CCs may be consecutive or inconsecutive in frequency domain. Different CCs may be on a same frequency band, and may correspond to intra-band carrier aggregation (intra-band CA). Alternatively, different CCs may be on different frequency bands, and may correspond to inter-band carrier aggregation (inter-band CA).

It should be understood that in this application, one component carrier may correspond to one serving cell (serving cell) of the terminal. In a Chinese context, the component carrier is also translated as a component carrier, and may be briefly referred to as a carrier; and the serving cell may be briefly referred to as a cell. Unless otherwise specified, in this application, terms "carrier", "component carrier", "aggregated carrier", "aggregated component carrier", "serving cell", "cell", "one of a PCell or an SCell", and "one of a PCC or an SCC" maybe used interchangeably.

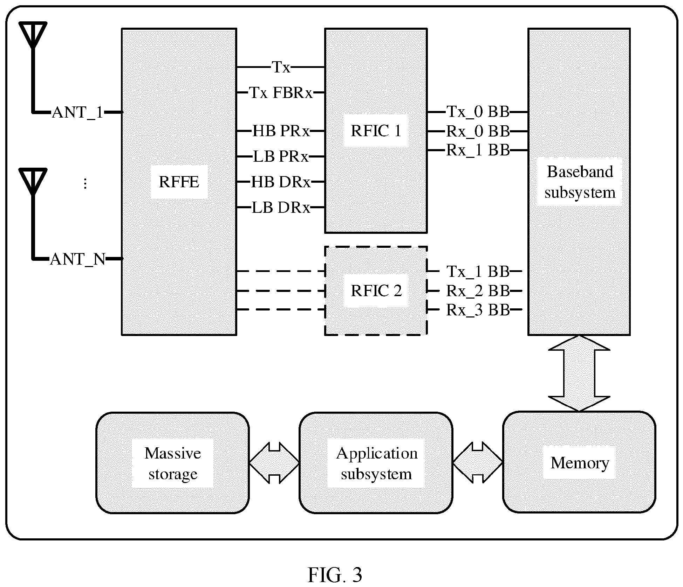

FIG. 3 is a schematic diagram of a structure of a wireless communication device according to an embodiment of this application. The wireless communication device may be the terminal or the base station in embodiments of this application. As shown in FIG. 2, the wireless communication device may include an application subsystem, a memory (memory), massive storage (massive storage), a baseband subsystem, a radio frequency integrated circuit (radio frequency integrated circuit, RFIC), a radio frequency front end (radio frequency front end, RFFE) component, and an antenna (antenna, ANT). The components may be coupled to each other through various interconnection buses or in other electrical connection manners.

In FIG. 3, ANT_1 represents a first antenna, ANT N represents an N^{th} antenna, and N is a positive integer greater than 1. Tx represents a transmit path, and Rx represents a receive path. Different numbers represent different paths. FBRx represents a feedback receive path, PRx represents a primary receive path, and DRx represents a diversity receive path. HB represents a high band, LB represents a low band, and HB or LB indicates that a band is comparatively high or low. BB represents a baseband. It should be understood that marks and components in FIG. 3 are merely used for illustration, and are merely used as a possible implementation. This embodiment of this application further includes another implementation.

The radio frequency integrated circuit may further be divided into a radio frequency receive path (RF receive path) and a radio frequency transmit path (RF transmit path). The radio frequency receive path may receive a radio frequency signal through the antenna, perform processing (such as amplification, filtering, and down-conversion) on the radio frequency signal to obtain a baseband signal, and transfer the baseband signal to the baseband subsystem. The radio frequency transmit path may receive a baseband signal from the baseband subsystem, perform radio frequency processing (such as up-conversion, amplification, and filtering) on the baseband signal to obtain a radio frequency signal, and finally radiate the radio frequency signal into space through the antenna. Specifically, the radio frequency subsystem may include electronic components such as an antenna switch, an antenna tuner, a low noise amplifier (low noise amplifier, LNA), a power amplifier (power amplifier, PA), a frequency mixer (mixer), a local oscillator (local oscillator, LO), and a filter (filter). The electronic components may be integrated into one or more chips based on a requirement. The antenna may also sometimes be considered as a part of the radio frequency subsystem.

The baseband subsystem may extract useful information or data bits from the baseband signal, or convert information or data bits into a to-be-sent baseband signal. The information or data bits may be data that represents user data or control information such as a voice, a text, or video. For example, the baseband subsystem may implement modulation and demodulation, encoding and decoding, and other signal processing operations. Different radio access technologies, such as 5G NR and 4G LTE, usually have different baseband signal processing operations. Therefore, the baseband subsystem may include the plurality of processing cores or the plurality of HACs, to support convergence of a plurality of mobile communication modes. The baseband subsystem is generally integrated into one or more chips, and a chip integrating the baseband subsystem is generally referred to as a baseband processor chip (baseband integrated circuit, BBIC).

In addition, because the radio frequency signal is an analog signal, and the baseband subsystem mainly processes a digital signal, an analog-to-digital conversion component is further required in the wireless communication device. The analog-to-digital conversion component includes an analog-to-digital converter (analog-to-digital converter, ADC) that converts an analog signal into a digital signal, and a digital-to-analog converter (digital-to-analog converter, DAC) that converts a digital signal into an analog signal. In this embodiment of this application, the analog-to-digital conversion component may be disposed in the baseband subsystem, or may be disposed in the radio frequency subsystem.

The application subsystem may be used as a main control system or a main computing system of the wireless communication device, and is configured to: run a main operating system and an application program, manage software and hardware resources of the entire wireless communication device, and provide a user operation interface for a user. The application subsystem may include one or more processing cores. In addition, the application subsystem may further include driver software related to another subsystem (for example, the baseband subsystem). The baseband subsystem may also include one or more processing cores, hardware accelerators (hardware accelerators, HACs), a cache, and the like.

In this embodiment of this application, the radio frequency subsystem may include an independent antenna, an independent radio frequency front-end (RF front-end, RFFE) component, and an independent radio frequency chip. The radio frequency chip is also sometimes referred to as a receiver (receiver), a transmitter (transmitter), or a transceiver (transceiver). All of the antenna, the radio frequency front-end component, and the radio frequency processing chip may be manufactured and sold separately. Certainly, the radio frequency subsystem may also use different components or different integration manners based on requirements for power consumption and performance. For example, the radio frequency front-end component is integrated into the radio frequency chip, or even both the antenna and the radio frequency front end component are integrated into the radio frequency chip, and the radio frequency chip may also sometimes be referred to as a radio frequency antenna module or an antenna module.

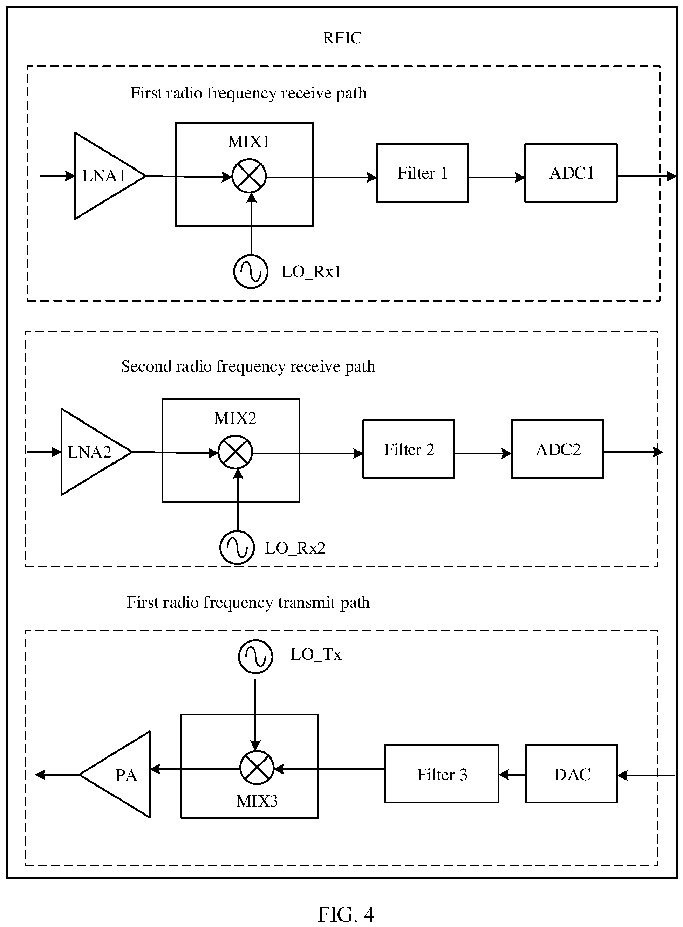

FIG. 4 is a schematic diagram of a radio frequency chip according to an embodiment of this application. It should be understood that, although there are only two receive paths and one transmit path in FIG. 4, this embodiment may not be limited thereto. A radio frequency integrated circuit may include two or more transmit paths and receive paths, and another quantity of paths. A radio frequency receive path is generally configured to process a received RF signal into an intermediate frequency signal. A radio frequency transmit path is generally configured to process an intermediate frequency signal into a to-be-sent radio frequency signal. As shown in FIG. 4, the radio frequency chip (RFIC) includes a first radio frequency receive path, a second radio frequency receive path, and a first radio frequency transmit path. The first radio frequency receive path includes a first low noise amplifier (low noise amplifier 1, LNA1), a first frequency mixer (mixer 1, MIX1), a first receive local oscillator (LO_Rx1), a first filter (Filter 1), and a first analog to digital converter (analog to digital converter 1, ADC1). The second radio frequency receive path includes a second low noise amplifier (low noise amplifier 2, LNA2), a second frequency mixer (mixer 2, MIX2), a second receive local oscillator (LO_Rx2), a second filter (Filter 2), and a second analog to digital converter (analog to digital converter 2, ADC2). The low noise amplifier in the radio frequency receive path amplifies the received radio frequency signal. The frequency mixer mixes the radio frequency signal amplified by the low noise amplifier with a local oscillator signal provided by the LO RX, to obtain the intermediate frequency signal. The immediate frequency signal is sent to the ADC after passing through the filter. The first radio frequency transmit path shown in FIG. 4 includes a digital to analog converter (digital to analog converter, DAC), a third filter (Filter 3), a third frequency mixer (mixer 3, MIX3), a transmit local oscillator (LO_Tx), and a power amplifier (power amplifier, PA). The DAC in the radio frequency transmit path converts a digital signal into an analog signal, and then sends the analog signal to the filter. The filter performs filtering processing on the signal. The frequency mixer performs frequency mixing and shifting on the analog signal filtered by the filter and a signal provided by the local oscillator, to form a radio frequency signal. The PA performs power amplification on the radio frequency signal. The PA and the LNA may alternatively be outside the radio frequency path, and serve as independent radio frequency front-end chip components outside the radio frequency chip.

For the radio frequency receive path, a signal to noise ratio (signal to noise ratio, S/N) is an important indicator. A radio frequency module in the radio frequency receive path may operate only after being powered by a power supply module. Power supply noise introduced by the power supply module is an important factor that affects the S/N of the radio frequency receive path. The power supply noise comes from two main sources. The first is an external power supply of the radio frequency chip. For example, high-frequency noise caused by a non-ideal feature of the external power supply of the radio frequency chip is conducted to the powered radio frequency module through the power supply module.

The second is crosstalk between two radio frequency modules. Generally, a same power supply module simultaneously supplies power to a plurality of radio frequency modules. When the two radio frequency paths simultaneously operate, radio frequency signals of the two radio frequency paths are coupled through a power supply path provided by the same power supply module, resulting in crosstalk.

Currently, the power supply noise is reduced by optimizing a circuit structure design of the power module and improving the signal to noise ratio of the power supply. However, in this way, a requirement for the external power supply is excessively high, and costs are increased. In addition, noise crosstalk on the same power supply path cannot be alleviated.

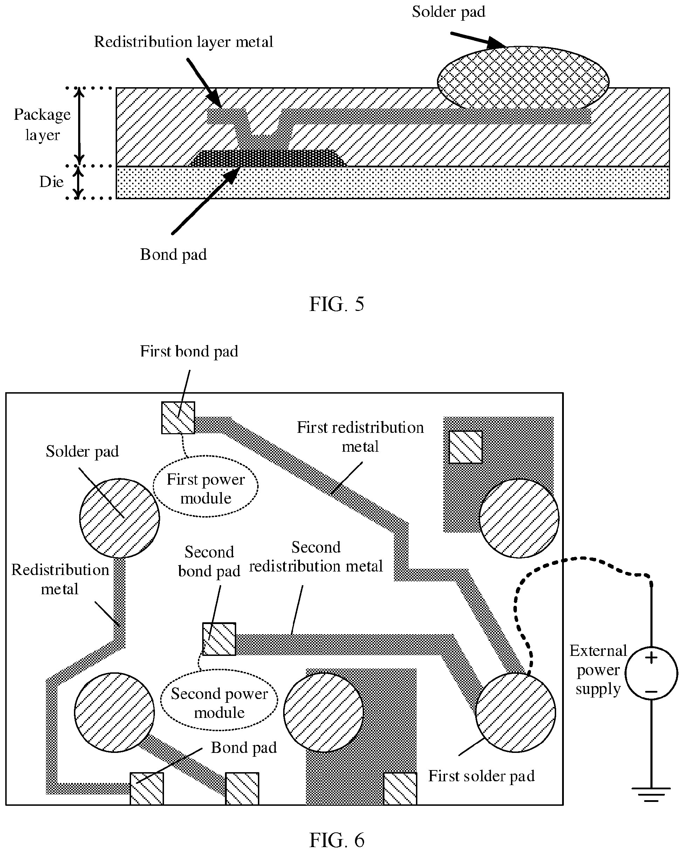

FIG. 5 is a schematic side view of a chip apparatus according to an embodiment of this application. As shown in FIG. 5, a chip includes a die (Die) and a package layer (Package layer). The die includes a substrate and a poly (poly) layer located on the substrate. An active region of the chip, namely a region for implementing a chip transistor, is disposed in the substrate and the polysilicon. A complementary metal oxide semiconductor (complementary metal oxide semiconductor, CMOS) chip is used as an example. A source, drain, and gate of a positive channel metal oxide semiconductor (positive channel metal oxide semiconductor, PMOS) transistor and a source, a drain, and a gate of a negative channel metal oxide semiconductor (negative channel metal oxide semiconductor, NMOS) transistor are disposed on the active region. An interconnection metal layer is disposed on the poly layer of the die. The interconnection metal layer of the die mainly provides an interconnection metal wire for a circuit component integrated in the die. The interconnection metal wire may include metal wires or metal surfaces that are located on metal layers and that are connected to each other, and vias between the metal layers.

Further, the package layer may be disposed on the die. The package layer is configured to package the die, to package the die into a final chip product form. The package layer shown in FIG. 5 may be a redistribution layer. The redistribution layer is disposed on an upper surface of the die. The redistribution layer may include a bond pad (Bond pad or Bonding pad) and a redistribution layer metal (redistribution layer metal, RDL metal). The bond pad is disposed on the upper surface of the die. An upper surface of the bond pad is exposed, to implement an external connection of the die. It should be understood that bond pads obtained by using different technological processes may have different heights. For example, an upper surface of the bond pad may be higher than a dielectric layer of the die and is directly exposed, or an upper surface of the bond pad may be parallel to or lower than a dielectric layer of the die and is exposed by using a windowing process. Bond pads that correspond to an input port pad, an output port pad, a grounding pad, a power supply pad, and a test pad of the chip are formed on the upper surface of the die.

The RDL metal may be disposed on the bond pad. A solder pad (Solder pad or Soldering pad) is disposed on the RDL metal. The solder pad is disposed on an upper surface of the RDL metal, and is configured to provide a solder joint at a chip package level, to further fasten the chip to a PCB or another package substrate. Based on a size and a process of the solder pad, the solder pad may be classified into a solder ball (solder ball), a solder bump (solder bump), or a solder joint having a similar function. The redistribution layer may include different redistribution metals, to implement an electrical connection between different solder pads. The RDL metal is disposed between the bond pad and the solder pad. One end of the RDL metal is connected to the upper surface of the bond pad, and the other end is connected to a lower surface of the solder pad.

FIG. 6 is a schematic diagram of a chip apparatus according to an embodiment of this application. As shown in FIG. 6, a bond pad is square, and a solder pad is round. FIG. 6 is merely a schematic diagram. Shapes of the bond pad and the solder pad in this embodiment of this application may not be limited thereto, and there may be more options. As shown in FIG. 6, because the solder pad is configured to fasten a chip to an external package substrate or a PCB, and needs to bear greater hard force, the solder pad generally has a larger area than the bond pad. Different solder pads and bond pads are connected through different redistribution metals.

A chip structure shown in FIG. 6 is provided with a first bond pad, a second bond pad, and a first solder pad. The first bond pad and the second bond pad are disposed on an upper surface of a die. The first solder pad is disposed on an upper surface of the redistribution layer. A plurality of redistribution metals are disposed at the redistribution layer, to implement a connection between the bond pad and the solder pad. A first power module and a second power module are disposed in the die. The first power module is coupled to the first bond pad. The second power module is coupled to the second bond pad.

The first solder pad is coupled to an external power supply of the chip apparatus, and is configured to supply power to the chip apparatus. It should be understood that the external power supply may include but is not limited to a power chip, a battery, a USB power supply, and a similar power supply apparatus or module that can provide a voltage or a current. It should be understood that the external power supply may be a system-level power supply that integrates a plurality of power supply modules, for example, a low-dropout regulator (low-dropout regulator, LDO) or a direct current to direct current converter (direct current to direct current converter, DCDC), or may be an individual module-level power supply such as an LDO or a DCDC.

Optionally, the external power supply and the chip apparatus may be welded to a same package substrate or a same PCB. A power supply pad of the external power supply may be connected to the first solder pad through a trace of the package substrate or the PCB.

Optionally, the external power supply and the chip apparatus may alternatively be packaged together through molding (molding). The power supply pad of the external power supply may be connected to the first solder pad through a through hole generated by a special process such as a through silicon via (through silicon via, TSV) or a through dielectric via (through Dielectric via, TDV).

A first redistribution metal and a second redistribution metal are disposed in the package layer. The first solder pad is coupled to the first bond pad through the first redistribution metal. The first solder pad is coupled to the second bond pad through the second redistribution metal.

As shown in FIG. 6, two ends of the first redistribution metal may be respectively connected to the first bond pad and the first solder pad. Two ends of the second redistribution metal may be respectively connected to the second bond pad and the first solder pad. On a specific chip routing structure, one end of the first redistribution metal is located on an upper surface of the first bond pad, and the other end of the first redistribution metal is located on a lower surface of the first solder pad. One end of the second redistribution metal is located on the upper surface of the first bond pad, and the other end is located on the lower surface of the first solder pad.

The different bond pads are connected to the different power modules, and the different bond pads are connected to the external power supply through the different redistribution metals and the solder pad. This provides better power supply noise performance. Compared with a power supply structure with routing inside a chip, this chip structure allows traces of the redistribution metals to have less noise interference of other modules caused by internal traces of a die, and less noise interference of a substrate. Therefore, the power supply performance is better.

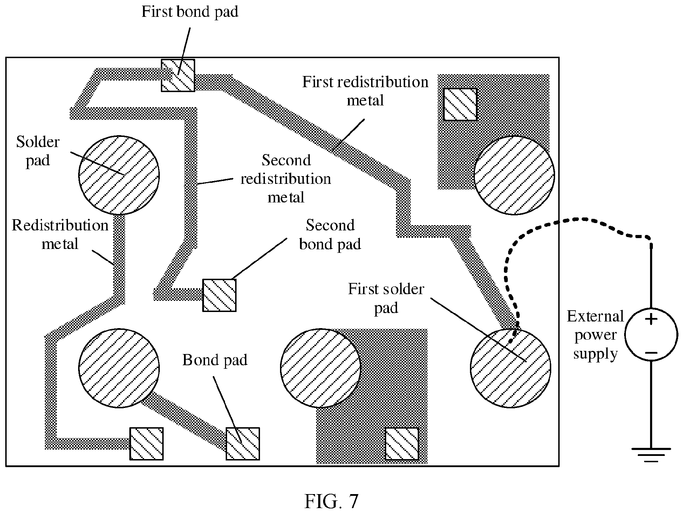

FIG. 7 is a schematic diagram of another chip apparatus according to an embodiment of this application. Based on the embodiment in FIG. 6, the second redistribution metal in this embodiment may be connected in another manner.

As shown in FIG. 7, two ends of the first redistribution metal are respectively connected to the first bond pad and the first solder pad. Two ends of the second redistribution metal are respectively connected to the second bond pad and the first bond pad.

On a specific chip routing structure, one end of the first redistribution metal is located on an upper surface of the first bond pad, and the other end of the first redistribution metal is located on a lower surface of the first solder pad. One end of the second redistribution metal is located on the upper surface of the first bond pad, and the other end is located on an upper surface of the second bond pad. A connection between the first solder pad and the second bond pad may also be implemented through a connection between the second redistribution metal and the first bond pad and a connection between the second redistribution metal and the second bond pad. Compared with the connection manner in FIG. 6, in this indirect connection manner of the second redistribution metal in FIG. 7, a spatial routing distance at the redistribution layer between the first bond pad and the second bond pad can be fully used. In this way, an equivalent routing length between the second bond pad and the first solder pad is longer, and equivalent inductance is higher, and filtering effect of a power supply path is better. This better improves power supply noise performance of the chip apparatus.

In the chip structure shown in FIG. 6 and FIG. 7, the connection manner of the different redistribution metals is introduced, to connect the different bond pads to a same power supply solder pad. This improves isolation between the different power modules, and improves an equivalent inductor of the different power modules on the power supply path. In this way, filtering effect of the power supply path is better. Noise of the power supply transmitted on the power supply path can be filtered out, and noise caused by crosstalk between modules on the power supply path can also be filtered out. This improves power supply noise performance of the chip apparatus.

It should be understood that the chip structure shown in FIG. 6 and FIG. 7 is a wafer level chip scale package (wafer level chip scale package, WLCSP). The chip structure in this embodiment of this application may alternatively be not limited thereto. The chip structure in this application may alternatively be a chip package process structure based on an existing wirebond (wirebond) or copper pillar (copper pillar), or another similar form. For example, when the chip is packaged based on the wirebond, the bond pad of the chip is connected to the solder pad of the chip through the wirebond. When the chip is packaged based on the copper pillar or the like, the bond pad of the chip is connected to the solder pad through the copper pillar or the like.

For example, when the chip is packaged based on the wirebond in this embodiment of this application, the chip structure may include a first bond pad, a second bond pad, a first wirebond, a second wirebond, and a first solder pad. The first solder pad may be connected to the first bond pad through the first wirebond. The first solder pad may be connected to the second bond pad through the second wirebond. The first power module is coupled to the first bond pad. The second power module is coupled to the second bond pad. The first solder pad is coupled to the external power supply. The different wirebonds are introduced, to connect the different bond pads to a same power supply solder pad, so that isolation between the different power modules connected to the power supply bond pad is improved, and filtering effect of noise transmitted on the power supply path is better. This improves power supply noise performance of the chip apparatus.

The package forms such as the redistribution metal, the wirebond, and the copper pillar have different advantages in different application scenarios. For a small chip with a high requirement for performance of a power supply, the redistribution metal is more advantageous. For a plurality of chips packaged with a high requirement for a thickness, the copper pillar is more advantageous. For a large chip with a high requirement for costs, the wirebond is more advantageous.

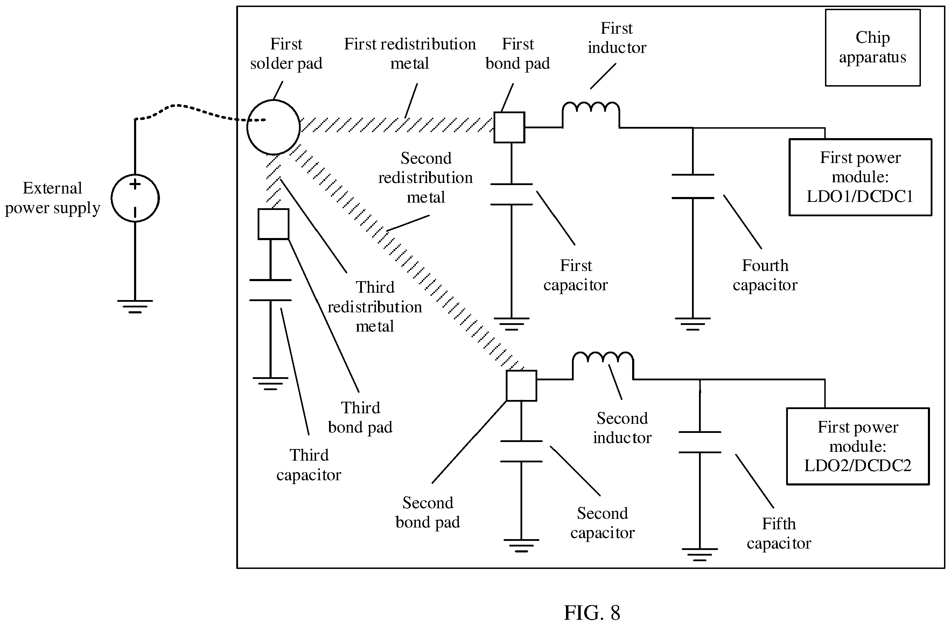

FIG. 8 is a schematic diagram of a chip architecture according to an embodiment of this application. Based on the foregoing embodiment, as shown in FIG. 8, the chip apparatus may further be provided with a third bond pad. The third bond pad is connected to the first solder pad through a third redistribution metal. A third capacitor may be disposed in the die of the chip apparatus. One end of the third capacitor is grounded, and the other end is coupled to the third bond pad. Through coupling to the third bond pad on which the grounded third capacitor is disposed, power supply noise performance on the first solder pad coupled to the external power supply is further improved. This improves performance of the entire chip apparatus. The third bond pad mainly functions to provide the grounded capacitor for the external power supply instead of supplying power. Therefore, in a chip layout, an equivalent inductor of the third redistribution metal coupled between the third bond pad and the first solder pad can be reduced.

Preferably, a length of the third redistribution metal may be less than a length of the first redistribution metal and a length of the first redistribution metal.

Preferably, the third bond pad may be disposed below the first solder pad. A direction of the third redistribution metal is only a longitudinal connection direction at the package layer, which is similar to the connection manner of the via or the through hole. This minimizes a length of the third redistribution metal.

Further, a first capacitor may be further disposed in the die of the chip apparatus. One end of the first capacitor is grounded, and the other end of the first capacitor is connected to the first bond pad. The first capacitor is configured to provide a grounded capacitor for the power supply path of the first bond pad, and forms a first-order inductor-capacitor (LC) filter network together with the first redistribution metal having an equivalent inductor, to reduce power supply noise on the power supply path of the first power module.

Further, a first inductor may be disposed in the die of the chip apparatus. One end of the first inductor is connected to the first bond pad, and the other end of the first inductor is connected to the first power module. The first inductor may be implemented by using metal coils at one or more metal layers in the chip. The first inductor may form an inductor-capacitor-inductor (LCL) "π" type filter network together with the first redistribution metal and the first capacitor. This further improves noise performance on the power supply path of the first power module.

Further, a fourth capacitor may be disposed in the die of the chip apparatus. One end of the fourth capacitor is grounded, and the other end of the fourth capacitor is connected to the first power module. The fourth capacitor is configured to provide a grounded capacitor for the first power module, and forms a second-order LC filter network together with the first redistribution metal, the first capacitor, and the first inductor, to further reduce the power supply noise on the power supply path of the first power module.

Similarly, one or more components of a second capacitor, a second inductor, and a fifth capacitor may also be disposed in the die of the chip apparatus and located between the second bond pad and the second power module. The second capacitor, the second inductor, and the fifth capacitor may form a first-order LC filter network, an LCL "π" type filter network, or a second-order LC filter network together with the second redistribution metal with an equivalent inductor, to reduce power supply noise on the power supply path of the second power module.

The first capacitor to the fifth capacitor shown in FIG. 8 may be simple passive capacitors such as a metal oxide metal (metal oxide metal, MOM) capacitor or a metal insulator metal (metal insulator metal, MIM) capacitor; may be a metal oxide semiconductor (metal oxide semiconductor, MOS) capacitor; or may be a circuit topology with a capacitance characteristic, such as an electrostatic discharge (Electrostatic discharge, ESD) clamp (clamp) circuit.

It should be understood that grounded ends of the first capacitor to the fifth capacitor in this application are one or more ground bond pads that are of the first capacitor to the fifth capacitor and that are connected into the chip apparatus and specially used for grounding, and then the ground bond pads are connected to an external reference ground of the chip apparatus.

The first power module and the second power module may be circuit modules having a similar power supply function, such as an LDO or a DCDC, and are configured to supply power to one or more circuit functional modules in the chip apparatus.

It should be understood that, although the architecture provided in this application for reducing the power supply noise can improve power supply performance of the chip apparatus, extra bond pads, redistribution metals, on-chip capacitors, or on-chip inductors need to be paid. This brings extra areas and costs to the chip apparatus. Therefore, using the structure provided in this application for reducing the power supply noise to locate a circuit module that is highly sensitive to the power supply noise in the chip apparatus is also one of factors that need to be considered.

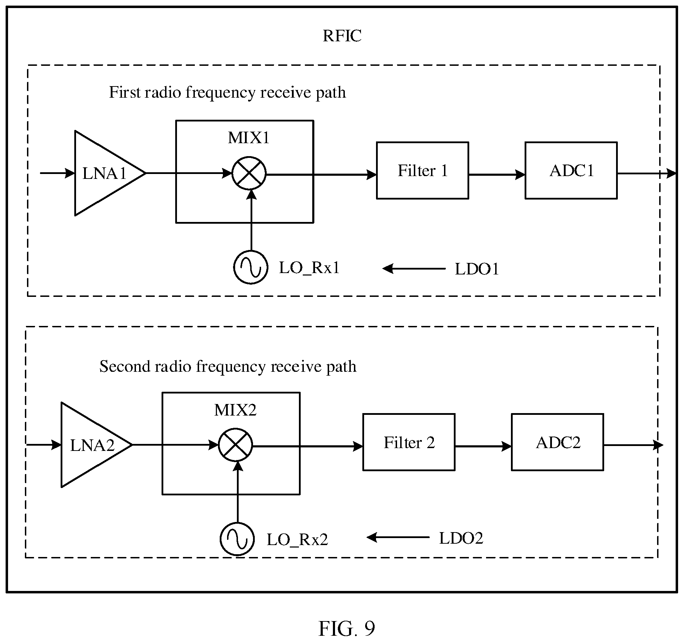

FIG. 9 is a schematic diagram of another chip architecture according to an embodiment of this application. As shown in FIG. 9, based on the foregoing embodiment, a typical module having high sensitivity to power supply noise is a radio frequency module of a receive path under DLCA. As shown in FIG. 9, a first radio frequency receive path is configured to receive a first carrier CC1, and a second radio frequency receive path is configured to receive a second carrier CC2. For example, a radio frequency module of the second receive path and a radio frequency module of the first receive path may consider introducing the architecture for reducing power supply noise in this embodiment of this application.

Optionally, as shown in FIG. 9, a first power module LDO1 may be configured to supply power to an LO_Rx1 of the first radio frequency receive path, and a second power module LDO2 may be configured to supply power to an LO_Rx2 of the second radio frequency receive path.

Optionally, an LDO1 may be configured to supply power to an LO_Rx1 of the first radio frequency receive path, and an LDO2 may be configured to supply power to an LO LNA2 of the second radio frequency receive path.

Optionally, an LDO1 may be configured to supply power to an LO_Rx1 of the first radio frequency receive path, and an LDO2 may be configured to supply power to a Filter 1 of the first radio frequency receive path.

Similarly, the chip architecture for reducing power supply noise in this embodiment of this application may be introduced between a frequency mixer 1 and the LO_Rx2 and between an LNA1 and an LNA2.

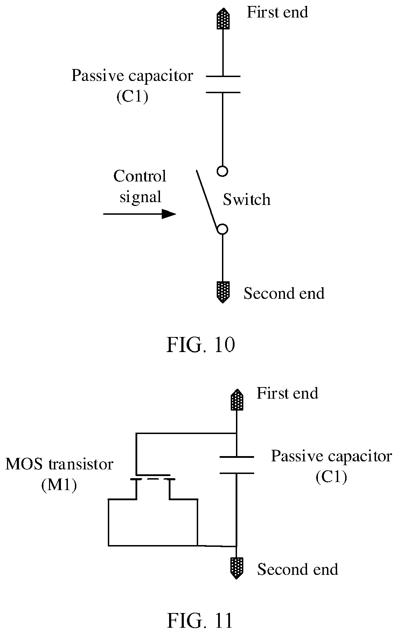

FIG. 10 is a schematic diagram of a capacitor according to an embodiment of this application. As shown in FIG. 10, the capacitor includes a switch and a passive capacitor. The switch and the passive capacitor are coupled in series between a first end and a second end of the capacitor. The passive capacitor may be a MOM capacitor or a MIM capacitor. The switch is implemented by using a MOS transistor. The MOS transistor may be a PMOS transistor or an NMOS transistor. A gate of the MOS transistor is coupled to a control signal. The control signal is used for controlling conduction and cutoff of the MOS transistor. The capacitor shown in FIG. 10 may be used as a capacitor in embodiments of this application. In an ideal case, when a switch is turned on, a value of capacitance between the first end and the second end of the capacitor is C1, and is namely a value of capacitance of the passive capacitor of the capacitor. In the capacitor structure shown in FIG. 10, to reduce on resistance, the MOS transistor used as a switch usually has a large size, and wastes a specific area, so that capacitance density is reduced to an extent.

FIG. 11 is a schematic diagram of another capacitor according to an embodiment of this application. As shown in FIG. 11, the capacitor includes a passive capacitor and a MOS transistor. The passive capacitor and the MOS transistor are connected in parallel between a first end and a second end of the capacitor. Similarly, the passive capacitor may be a MOM capacitor or a MIM capacitor. The MOS transistor may be a PMOS transistor or an NMOS transistor. When the first end of the capacitor is connected to a low level and the second end is connected to a high level, the MOS transistor is a PMOS transistor, a gate of the PMOS transistor is connected to the low level through the first end, and a source and a drain of the PMOS transistor are connected to the high level through the second end. When the second end of the capacitor is connected to a low level and the first end is connected to a high level, the MOS transistor is an NMOS transistor, a gate of the NMOS transistor is connected to the high level through the first end, and a source and a drain of the NMOS transistor are connected to the low level through the second end.

A value of capacitance between the first end and the second end of the capacitor is C1+Cm1. In other words, in addition to a value (C1) of capacitance of the passive capacitor, a value (Cm1) of parasitic capacitance between the gate and both of the source and the drain of the MOS transistor is also introduced. Therefore, compared with the foregoing embodiment, the capacitor shown in FIG. 11 has higher capacitance density. However, because the gate of the MOS transistor shown in FIG. 11 is directly connected to a power supply or a ground through the first end of the capacitor, an ESD risk is caused. Therefore, the capacitor shown in FIG. 11 has a specific safety defect.

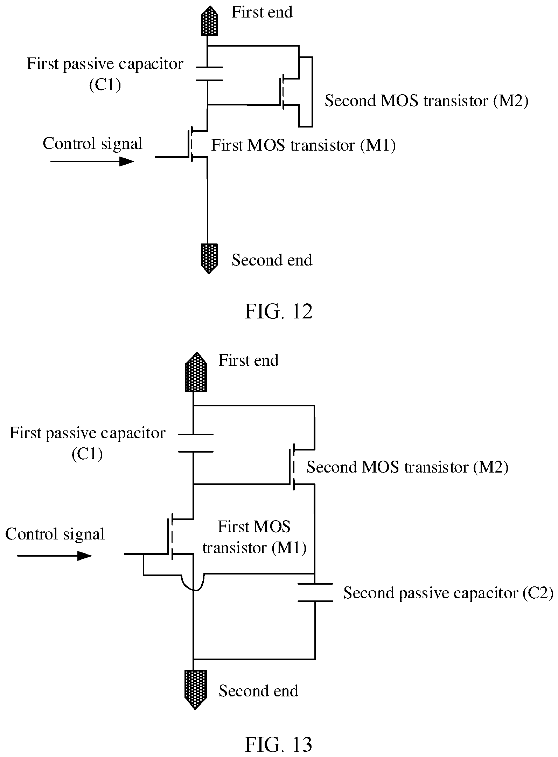

FIG. 12 is a schematic diagram of another capacitor according to an embodiment of this application. As shown in FIG. 12, the capacitor includes a first MOS transistor and a first passive capacitor. The first passive capacitor and the first MOS transistor are connected in series between a first end and a second end of the capacitor. A gate of the first MOS transistor is configured to receive a control signal. The control signal is used for implementing conduction and cutoff of the first MOS transistor, to implement a switch function. A gate of a second MOS transistor is connected to a connection end of the first passive capacitor and the first MOS transistor, and a source and a drain of the second MOS transistor are jointly coupled to the first end of the capacitor.

Similarly, the first passive capacitor may be a MOM capacitor or a MIM capacitor.

The MOS transistor may be a PMOS transistor or an NMOS transistor. When the first end of the capacitor is connected to a high level and the second end is connected to a low level, the first MOS transistor is an NMOS transistor, and the second MOS transistor is a PMOS transistor. When the control signal is active at the high level and the first MOS transistor is turned on, the second MOS transistor and the first passive capacitor are connected between the first end and the second end of the capacitor.

Similarly, when the first end of the capacitor is connected to a low level and the second end is connected to a high level, the first MOS transistor is a PMOS transistor, and the second MOS transistor is an NMOS transistor. In this case, the control signal is active at the low level and the first MOS transistor is turned on, and the second MOS transistor and the first passive capacitor are connected between the first end and the second end of the capacitor.

In this architecture in the embodiment shown in FIG. 12, when the first MOS transistor is turned on, a value of capacitance of the first end and the second end is C1+Cm2, and a gate of the MOS transistor is not directly connected to a power supply or a ground. Therefore, compared with the foregoing capacitor embodiments in FIG. 11 and FIG. 10, capacitance density and anti-ESD performance are optimized.

FIG. 13 is a schematic diagram of another capacitor according to an embodiment of this application. Based on the foregoing embodiment, the embodiment shown in FIG. 13 further includes a second passive capacitor. The second passive capacitor and the second MOS transistor are connected in series between the first end and the second end of the capacitor. A gate of the second MOS transistor is connected to a connection end of the first passive capacitor and the first MOS transistor, and a source and a drain are connected to the second passive capacitor and the first end of the capacitor respectively. A gate of the first MOS transistor is further connected to a connection end of the second passive capacitor and the second MOS transistor.

Specifically, when the first end of the capacitor is connected to a high level and the second end is connected to a low level, the first MOS transistor is an NMOS transistor, and the second MOS transistor is a PMOS transistor. The control signal is active at the high level, so that the first MOS transistor is turned on, the gate of the second MOS transistor is grounded, and the second MOS transistor is also turned on. In addition, the gate of the first MOS transistor is connected to the high level, and a source and a drain are connected to the low level. The gate of the second MOS transistor is connected to the low level, and the source and drain are connected to the high level. Therefore, in addition to C1 and C2 in parallel connections, capacitance between the first end and the second end includes parasitic capacitance (Cm1) between the gate and both of the source and the drain of the first MOS transistor and parasitic capacitance (Cm2) between the gate and both of the source and the drain of the second MOS transistor. A value of the capacitance between the first end and the second end of the capacitor is C1+C2+Cm1+Cm2.

Similarly, when the first end of the capacitor is connected to a low level and the second end is connected to a high level, the first MOS transistor is a PMOS transistor, and the second MOS transistor is an NMOS transistor. The control signal is active at the low level, so that the first MOS transistor is turned on, the gate of the second MOS transistor is connected to the high level, and the second MOS transistor is also turned on. In addition, the gate of the first MOS transistor is connected to the low level, and a source and a drain are connected to the high level. The gate of the second MOS transistor is connected to the high level, and the source and drain are connected to the low level. A value of the capacitance between the first end and the second end of the capacitor is also C1+C2+Cm1+Cm2.

In this architecture in the embodiment shown in FIG. 12, the value of the capacitance between the first end and the second end is C1+C2+Cm1+Cm2. Compared with the foregoing capacitor embodiment, capacitance density is further optimized.

In addition, when a switch is turned off, a plurality of capacitors are connected in series between the first end and the second end of the capacitor, to implement C1, Cm2, and C2 in a series connection. This also reduces a split voltage on a single capacitor, and improves an anti-ESD capability.

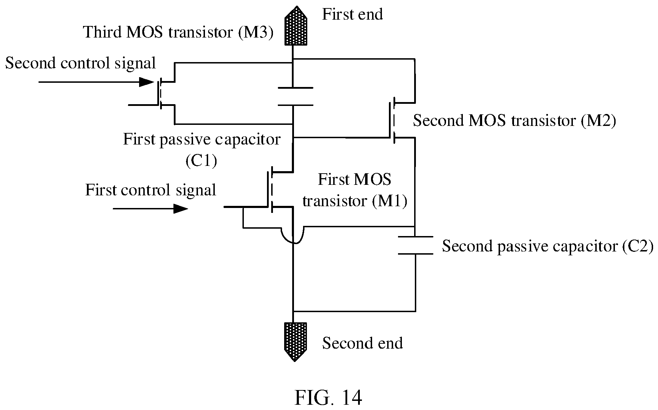

FIG. 14 is a schematic diagram of another capacitor according to an embodiment of this application. Based on the foregoing embodiment, the capacitor shown in FIG. 14 further includes a third MOS transistor. A source and a drain of the third MOS transistor are respectively coupled to the first end of the capacitor and the connection end (namely the gate of the second MOS transistor) of the first passive capacitor and the first MOS transistor. A gate of the third MOS transistor is configured to receive a second control signal.

When the first MOS transistor is turned off, the second control signal is used for turning on the third MOS transistor, so that the gate of the second MOS transistor is connected to a determined potential connected to the first end. In this way, the capacitor can work in a more determined state, and stability of the capacitor can be improved in a scenario in which the capacitor is used more strictly.

When the first MOS transistor is turned on, the second control signal is used for turning off the third MOS transistor, so that the third MOS transistor does not affect normal operation of each component of the capacitor.

Specifically, when the first end of the capacitor is connected to a high level and the second end is connected to a low level, the first MOS transistor is an NMOS transistor, the third MOS transistor is a PMOS transistor, and the second control signal and the first control signal are in a same phase.

When the first end of the capacitor is connected to a low level and the second end is connected to a high level, the first MOS transistor is a PMOS transistor, the third MOS transistor is an NMOS transistor, and the second control signal and the first control signal are in a same phase.

The third MOS transistor is introduced only to improve stability of the capacitor, so that the potential of the gate of the second MOS transistor remains fixed when the capacitor does not operate. Therefore, introduction of the third MOS transistor does not improve the capacitance density and the anti-ESD capability between the first end and the second end of the capacitor. Therefore, a width-to-length ratio of the third MOS may be less than that of the first MOS transistor and the second MOS transistor.

It should be understood that sequence numbers of the foregoing processes do not mean execution sequences in this application. The execution sequences of the processes should be determined according to functions and internal logic of the processes, and should not be construed as any limitation on the implementation processes of the embodiments of this application. The term "coupling" mentioned in this application is used for indicating interworking or interaction between different components, and may include a direct connection or an indirect connection performed by using another component.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

It is clear that a person skilled in the art can make various modifications and variations to this application without departing from the scope of this application. This application is intended to cover these modifications and variations of this application provided that they fall within the scope of the claims of this application and equivalent technologies thereof.

## Claims

1. A chip apparatus, comprising:
a die, a first bond pad, a second bond pad, and a first solder pad, wherein
the first bond pad and the second bond pad are disposed on an upper surface of the die, a first power module and a second power module are disposed in the die, the first power module is coupled to the first bond pad, and the second power module is coupled to the second bond pad; and
the first solder pad is separately coupled to an external power supply of the chip apparatus, the first bond pad, and the second bond pad.

2. The chip apparatus according to claim 1, further comprising:
a redistribution layer, wherein the redistribution layer is disposed on the upper surface of the die;
the first solder pad is disposed on an upper surface of the redistribution layer; and
a first redistribution metal and a second redistribution metal are disposed in the redistribution layer; and the first solder pad is coupled to the first bond pad through the first redistribution metal, and the first solder pad is coupled to the second bond pad through the second redistribution metal.

3. The chip apparatus according to claim 2, wherein
one end of the first redistribution metal is connected to an upper surface of the first bond pad, and the other end of the first redistribution metal is connected to a lower surface of the first solder pad; and one end of the second redistribution metal is connected to the upper surface of the first bond pad, and the other end of the second redistribution metal is connected to an upper surface of the second bond pad.

4. The chip apparatus according to any one of claims 1 to 3, wherein
a first capacitor is disposed in the die, and a first end and a second end of the first capacitor are coupled to a high level and a low level respectively.

5. The chip apparatus according to claim 4, wherein
the first capacitor comprises a first metal oxide semiconductor MOS transistor, a second MOS transistor, and a first passive capacitor;
the first MOS transistor and the first passive capacitor are coupled in series between the first end and the second end of the first capacitor, a gate of the first MOS transistor is configured to receive a first control signal, and the first control signal is used for controlling conduction and cut-off of the first MOS transistor; and
a gate of the second MOS transistor is coupled to a connection end of the first passive capacitor and the first MOS transistor, and a source and a drain of the second MOS transistor are jointly coupled to the first end of the first capacitor.

6. The chip apparatus according to claim 4, wherein
the first capacitor comprises a first MOS transistor, a second MOS transistor, a first passive capacitor, and a second passive capacitor;
the first MOS transistor and the first passive capacitor are coupled in series between the first end and the second end of the first capacitor, a gate of the first MOS transistor is configured to receive a first control signal, and the first control signal is used for controlling conduction and cut-off of the first MOS transistor;
a gate of the second MOS transistor is coupled to a connection end of the first passive capacitor and the first MOS transistor, and the second MOS transistor and the second passive capacitor are coupled in series between the first end and the second end of the first capacitor; and
a gate of the first MOS transistor is coupled to a connection end of the second passive capacitor and the second MOS transistor.

7. The chip apparatus according to any one of claims 5 to 6, wherein
the first capacitor further comprises a third MOS transistor, a width-to-length ratio of the third MOS is less than that of the first MOS transistor and the second MOS transistor, a source and a drain of the third MOS transistor are coupled to two ends of the first passive capacitor, a gate of the third MOS transistor is configured to receive a second control signal, and the second control signal is used for controlling conduction and cut-off of the third MOS transistor.

8. The chip apparatus according to any one of claims 5 to 7, wherein
the first passive capacitor or the second passive capacitor is a metal oxide metal MOM capacitor.

9. The chip apparatus according to any one of claims 4 to 8, further comprises:
a third bond pad, wherein the third bond pad is disposed on the upper surface of the die, a third redistribution metal is disposed in the redistribution layer, and the first solder pad is connected to the third bond pad through the third redistribution metal;
one end of the first capacitor is coupled to the third bond pad, and the other end of the first capacitor is grounded; and
a length of the third redistribution metal is less than a length of the first redistribution metal and a length of the second redistribution metal.

10. The chip apparatus according to any one of claims 1 to 9, wherein
a first inductor is further disposed in the die, one end of the first inductor is coupled to the first bond pad, and the other end of the first inductor is coupled to an input end of the first power module.

11. The chip apparatus according to claim 10, wherein
a second capacitor is further disposed in the die, one end of the second capacitor is coupled to the input end of the first power module, and the other end of the second capacitor is grounded.

12. The chip apparatus according to any one of claims 1 to 11, wherein
a first radio frequency receive path and a second radio frequency receive path are further disposed in the die; the first radio frequency receive path is configured to receive a first component carrier signal, the second radio frequency receive path is configured to receive a second component carrier signal, and the first component carrier signal and the second component carrier signal jointly implement downlink carrier aggregation; and
a plurality of radio frequency modules are disposed in the first radio frequency receive path and the second radio frequency receive path, and the first power module and the second power module are separately configured to supply power to one or more of the plurality of radio frequency modules.

13. The chip apparatus according to claim 12, wherein
a second inductor is further disposed in the die, one end of the second inductor is coupled to the second bond pad, and the other end of the second inductor is coupled to an input end of the second power module;
the first power module is a low-dropout regulator, and the first power module is configured to supply power to a first local oscillator of the first radio frequency receive path; and
the second power module is a low-dropout regulator, and the second power module is configured to supply power to a second local oscillator of the second radio frequency receive path.

14. The chip apparatus according to claim 12, wherein
the first power module is a low-dropout regulator, and the first power module is configured to supply power to a first local oscillator of the first radio frequency receive path; and
the second power module is a low-dropout regulator, and the second power module is configured to supply power to a low-pass filter of the first radio frequency receive path.

15. A wireless communication apparatus, comprising:
a baseband processing chip and the chip apparatus according to any one of claims 1 to 14, wherein the chip apparatus is coupled to the baseband processing chip.

16. The wireless communication apparatus according to claim 15, further comprising:
a printed circuit board and an antenna, wherein the baseband processing chip and the chip apparatus are fastened to the printed circuit board; and
the antenna is configured to provide a radio frequency signal for the chip apparatus.
